# EUROPÄISCHE PATENTSCHRIFT

(11) **EP 2 125 947 B1**
(45) Veröffentlichungstag und Bekanntmachung des Hinweises auf die Patenterteilung: **05.12.2018**
(21) Anmeldenummer: 08709115.3
(22) Anmeldetag: 20.02.2008
(51) Int. Cl.: C08L 23/04, C08L 23/10, B27N 3/00, C08L 27/00, C08L 97/02, C08L 23/08

(54) **VERBUNDWERKSTOFFE UND VERFAHREN ZU IHRER HERSTELLUNG**
COMPOSITE MATERIALS AND METHOD FOR PRODUCTION THEREOF
MATÉRIAUX COMPOSITES ET LEUR PROCÉDÉ DE PRÉPARATION

(30) Priorität: 23.02.2007 EP 07003747; 07.11.2007 EP 07120172
(43) Veröffentlichungstag der Anmeldung: 02.12.2009
(73) Patentinhaber: BASF SE, 67056 Ludwigshafen am Rhein (DE)
(72) Erfinder: PFISTNER, Heike, 67071 Ludwigshafen (DE); FECHTENKÖTTER, Andreas, Singapore 098647 (SG); PFEIFFER, Thomas, 67459 Böhl-Iggelheim (DE); KASEL, Wolfgang, 69226 Nussloch (DE); EHLE, Michael, 67071 Ludwigshafen (DE); DÜTTRA, Bernd, 67454 Hassloch (DE); NEUSS, Michael, 67316 Carlsberg (DE)
(74) Vertreter: BASF IP Association
(86) Internationale Anmeldenummer: PCT/EP2008/052028
(87) Internationale Veröffentlichungsnummer: WO 2008/101937

(56) Entgegenhaltungen:
- EP-A- 1 911 807
- WO-A-02/064670
- WO-A-2004/092279
- WO-A-2007/095670
- US-A- 4 480 061
- US-A- 4 863 995
- US-A1- 2004 072 924
- US-A1- 2005 123 744
- US-A1- 2005 187 315

## Beschreibung

Die vorliegende Erfindung betrifft Verbundwerkstoffe, umfassend
(A) 30 bis 90 Gew.-% natürliche Fasern,
(B) 9 bis 69 Gew.-% mindestens eines thermoplastischen Polymers,
(C) 1 bis 10 Gew.-% mindestens eines statistischen Copolymers mit einem Molekulargewicht Mₙ bis maximal 20.000 g/mol, erhältlich durch Copolymerisation von
   (a) 60 bis 98 Gew.-% Ethylen,
   (b) 2 bis 40 Gew.-% mindestens eines reaktiven Comonomers, gewählt aus
      (b1) ethylenisch ungesättigten C₃-C₁₀-Monocarbonsäuren,
      (b2) ethylenisch ungesättigten C₄-C₁₀-Dicarbonsäuren oder deren Anhydriden,
      (b3) Epoxidestern von ethylenisch ungesättigten C₃-C₁₀-Monocarbonsäuren,
      (b4) Comonomeren der allgemeinen Formel I 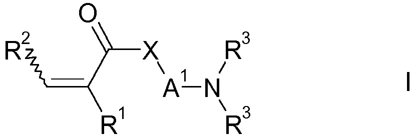 in denen die Variablen wie folgt definiert sind:
         R¹ gewählt aus Wasserstoff, unverzweigtem und verzweigtem C₁-C₁₀-Alkyl,
         R² gewählt aus Wasserstoff, unverzweigtem und verzweigtem C₁-C₁₀-Alkyl,
         R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
         X gewählt aus Sauerstoff, Schwefel und N-R⁴,
         R⁴ gewählt aus unverzweigtem und verzweigtem C₁-C₁₀-Alkyl,
         A¹ eine divalente Gruppe, gewählt aus C₁-C₁₀-Alkylen, C₄-C₁₀-Cycyloalkylen und Phenylen,
         und
   (c) gegebenenfalls mindestens einem weiteren Comonomer.

Weiterhin betrifft die vorliegende Erfindung ein Verfahren zur Herstellung von erfindungsgemäßen Verbundwerkstoffen. Weiterhin betrifft die vorliegende Erfindung die Verwendung von erfindungsgemäßen Verbundwerkstoffen als oder zur Herstellung von Gebäudeaußenteilen, und die vorliegende Erfindung betrifft Gebäudeaußenteile, umfassend oder hergestellt aus mindestens einem erfindungsgemäßen Verbundwerkstoff.

Holz als Werkstoff ist der Menschheit schon seit mehreren Jahrtausenden bekannt. Es zeichnet sich durch eine gute Verfügbarkeit an den meisten Stellen der Welt aus. Auch ist Holz durch zahlreiche Verarbeitungstechniken vielseitig zu verwerten. In zahlreichen Ländern findet Holz auch heute noch Anwendungen im Außenbereich von Gebäuden, beispielsweise bei der Herstellung von Dächern, Fassaden, Fensterrahmen, Veranden, weiterhin zur Herstellung von Bänken wie beispielsweise Parkbänken, und zur Herstellung von Hohlkörpern wie beispielsweise Hohlkammerprofilen für Terrassendielen oder Fensterbänke.

Ein gravierender Nachteil bei der Verwendung von Holz im Außenbereich von Gebäuden ist jedoch seine mangelnde Witterungsbeständigkeit. Insbesondere feucht-warme Witterung kann zu einem Verfaulen führen. Versuche, Holz durch Beschichten, beispielsweise durch Lackschichten gegen die Witterungseinflüsse zu schützen, können ein Verfaulen zwar verlangsamen, jedoch nicht vollkommen verhindern. Lackierungen haben außerdem den Nachteil, dass sie in regelmäßigen Abständen erneuert werden müssen. Außerdem sind zahlreiche Lackierungen empfindlich gegen mechanische Belastungen und Beschädigungen, die beispielsweise zu einem Abblättern der Lackierung führen können. Weiterhin ist die Formgebung von Holz nur durch aufwändige Verfahren, die viel Abfall verursachen, möglich.

Es hat nicht an Versuchen gefehlt, Holz durch Kunststoffe zu ersetzen. Kunststoffe wie beispielsweise Polyvinylchlorid oder Polyolefine wie Polyethylen oder Polypropylen haben jedoch thermische Ausdehnungskoeffizienten, die sich in vielen Außenanwendungen als zu groß herausstellen. Auch ist die Steifigkeit in vielen Fällen zu gering.

Als Lösung zahlreicher Probleme werden in der jüngsten Zeit Verbundwerkstoffe aus Holz und Kunststoff (englisch: wood-plastic composites, kurz: WPC) angeboten. Diese stellt man durch Vermischen von Kunststoff und Holzfasern her. Derartige Verbundwerkstoffe zeigen eine deutlich höhere Witterungsstabilität als reines Holz. Außerdem kann man mit ihnen Formgebungsverfahren ausüben wie mit thermoplastischen Kunststoffen, beispielsweise Spritzgießen und Extrusion.

Ein Problem von Verbundwerkstoffen aus Holz und Kunststoff ist jedoch in vielen Fällen eine nicht ausreichende Anbindung der Bestandteile Holz und Kunststoff aneinander. Bei nicht ausreichender Anbindung lässt die mechanische Festigkeit in vielen Fällen noch zu wünschen übrig.

Es bestand demnach die Aufgabe, Materialien bereit zu stellen, welche die Vorteile von Holz-Kunststoff-Verbundwerkstoffen aufweisen und eine verbesserte mechanische Festigkeit besitzen. Weiterhin bestand die Aufgabe, ein Verfahren zur Herstellung der erfindungsgemäßen Materialien bereit zu stellen. Schließlich bestand die Aufgabe, Verwendungen für die erfindungsgemäßen Materialien bereit zu stellen.

Dementsprechend wurden die eingangs definierten Verbundwerkstoffe gefunden.

Erfindungsgemäße Verbundwerkstoffe umfassen
(A) 30 bis 90 Gew.-% natürliche Fasern,
(B) 9 bis 69 Gew.-% mindestens eines thermoplastischen Polymers, im Rahmen der vorliegenden Erfindung auch Polymer (B) genannt,
(C) 1 bis 10 Gew.-% mindestens eines statistischen Copolymers mit einem Molekulargewicht Mₙ bis maximal 20.000 g/mol, erhältlich durch Copolymerisation von
   (a) 60 bis 98 Gew.-% Ethylen,
   (b) 2 bis 40 Gew.-% mindestens eines reaktiven Comonomers, gewählt aus
      (b1) ethylenisch ungesättigten C₃-C₁₀-Monocarbonsäuren,
      (b2) ethylenisch ungesättigten C₄-C₁₀-Dicarbonsäuren oder deren Anhydriden,
      (b3) Epoxidestern von ethylenisch ungesättigten C₃-C₁₀-Monocarbonsäuren,
      (b4) Comonomeren der allgemeinen Formel I 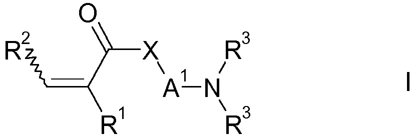 in denen die Variablen wie folgt definiert sind:
         R¹ gewählt aus Wasserstoff, unverzweigtem und verzweigtem C₁-C₁₀-Alkyl,
         R² gewählt aus Wasserstoff, unverzweigtem und verzweigtem C₁-C₁₀-Alkyl,
         R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
         X gewählt aus Sauerstoff, Schwefel und N-R⁴,
         R⁴ gewählt aus unverzweigtem und verzweigtem C₁-C₁₀-Alkyl,
         A¹ eine divalente Gruppe, gewählt aus C₁-C₁₀-Alkylen, C₄-C₁₀-Cycyloalkylen und Phenylen,
         und
   (c) gegebenenfalls mindestens einem weiteren Comonomer.

Dabei wird vorstehend definiertes Copolymer mit einem Molekulargewicht Mₙ bis maximal 20.000 g/mol, das erhältlich ist aus den vorstehend definierten Comonomeren, im Folgenden auch kurz als Copolymer (C) bezeichnet. Copolymer (C) kann für den Fall, dass es Comonomer (b4) einpolymerisiert enthält, in zumindest partiell protonierter Form oder als freies Amin vorliegen.

Unter natürlichen Fasern (A) wählt man vorzugsweise Cellulosefasern oder lignocellulosehaltige Fasern. Cellulosefasern werden im Rahmen der vorliegenden Erfindung auch als Cellulosefasern (A) bezeichnet. Beispiele sind Fasern von Flachs, Sisal, Hanf, Kokos, Jute, Kenaf, Baumwolle, von Abaca (Manilahanf), aber auch Reisspelzen, Bambus, Stroh und Erdnussschalen. Bevorzugte Beispiele für Cellulosefasern (A) sind Holzfasern. Dabei kann es sich bei Holzfasern um Fasern von frisch gewonnenem Holz handeln oder von Altholz. Weiterhin kann es sich bei Holzfasern um Fasern unterschiedlicher Holzarten wie Weichhölzer von z.B. Fichten, Kiefern, Tannen oder Lärchen und Harthölzer von z.B. Buchen und Eichen handeln. Auch Holzabfälle wie beispielsweise Hobelspäne, Sägespäne oder Sägemehl sind geeignet. Die Holzzusammensetzung kann in ihren Bestandteilen wie Cellulose, Hemicellulose und Lignin variieren.

In einer Ausführungsform handelt es sich bei Cellulosefasern um kationisch oder anionisch modifizierte Cellulosefasern. Unter kationisch modifizierten Cellulosefasern werden Reaktionsprodukte von Cellulosefasern mit kationischen Reagenzien wie z.B. Glycidyl-trimethylammoniumchlorid, Substitutionsprodukte von z.B. Tosylcellulose mit tertiären Aminen oder Heteroaromaten wie Pyridin oder Substitutionsprodukte von z.B. Tosylcellulose mit Aziden und anschließender Reduktion verstanden. Unter anionisch modifizierten Cellulosefasern werden Cellulosederivate wie Cellulosexanthogenat, Carboxymethylcellulose, Cellulosephosphate oder Cellulosesulfonate verstanden.

In einer Ausführungsform der vorliegenden Erfindung haben natürliche Fasern (A) mittlere Partikeldurchmesser im Bereich von 0,05 bis 3,0 mm, vorzugsweise von 0,1 bis 1,5 mm.

In einer Ausführungsform der vorliegenden Erfindung liegt das Verhältnis Länge/Dicke von natürlichen Fasern (A) im Bereich von 10 zu 1 bis 1 zu 1.

Erfindungsgemäße Verbundwerkstoffe enthalten weiterhin mindestens ein Polymer (B). Polymer (B) wird gewählt aus beliebigen thermoplastisch verformbaren Polymeren, die neu oder Recyclat aus alten thermoplastischen Polymeren sein können.

In einer Ausführungsform der vorliegenden Erfindung weist Polymer (B) ein mittleres Molekulargewicht M_{w} im Bereich von 50.000 bis 1.000.000 g/mol auf.

In einer bevorzugten Ausführungsform der vorliegenden Erfindung wählt man Polymer (B) aus Polyolefinen, bevorzugt Polyethylen, insbesondere HDPE, Polypropylen, insbesondere isotaktisches Polypropylen, und Polyvinylchlorid (PVC), insbesondere Hart-PVC, weiterhin Polyvinylacetat oder Mischungen von Polyethylen und Polypropylen.

Dabei schließen Polyethylen und Polypropylen jeweils auch Copolymere des Ethylens bzw. Propylens mit einem oder mehreren α-Olefin oder Styrol mit ein. So werden im Rahmen der vorliegenden Erfindung unter Polyethylen auch Copolymere mit umfasst, die neben Ethylen als Hauptmonomer (mindestens 50 Gew.-%) ein oder mehrere Comonomere einpolymerisiert enthalten, gewählt aus Styrol oder α-Olefinen wie beispielsweise Propylen, 1-Buten, 1-Hexen, 4-Methyl-1-Penten, 1-Octen, 1-Decen, 1-Dodecen, n-α-C22H₄₄, n-α-C24H₄₈ und n-α-C₂₀H₄₀. Im Rahmen der vorliegenden Erfindung werden unter Polypropylen auch Copolymere mit umfasst, die neben Propylen als Hauptmonomer (mindestens 50 Gew.-%) ein oder mehrere Comonomere einpolymerisiert enthalten, gewählt aus Styrol, Ethylen, 1-Buten, 1-Hexen, 4-Methyl-1-Penten, 1-Octen, 1-Decen, 1-Dodecen, n-α-C₂₂H₄₄, n-α-C₂₄H₄₈ und n-α-C₂₀H₄₀.

In einer anderen bevorzugten Ausführungsform der vorliegenden Erfindung wählt man thermoplastisches Polymer (B) aus biologisch abbaubaren Thermoplasten. Im Sinne der vorliegenden Erfindung ist das Merkmal "biologisch abbaubar" für einen Thermoplasten dann erfüllt, wenn der betreffende Thermoplast entsprechend den Anforderungen von DIN EN 13432 (Dezember 2000) abgebaut wird. Unter aeroben Bedingungen wird dabei ein Abbau zu mindestens 90% in maximal 6 Monaten vorausgesetzt. Beispiele für abbaubare Thermoplaste sind Polyester.

Bevorzugte Beispiele für biologisch abbaubare Thermoplaste sind Polylactid (auch als PLA bezeichnet), Polyhydroxybutyrat (auch als PHB bezeichnet), das von 3-Hydroxybuttersäure oder 4-Hydroxybuttersäure oder Mischungen derselben hergestellt sein kann, Polyhydroxyvalerat (PHV), Mischungen von Polyhydroxyalkanoaten wie Polyhydroxybutyrat/valerat (PHB/V) oder Mischungen teilaromatischer Polyester wie Ecoflex® (BASF Aktiengesellschaft). Dabei können die betreffenden Monomere als Racemat oder in ihrer optisch aktiven Form vorliegen.

Andere bevorzugte Beispiele für biologisch abbaubare Thermoplaste sind Polyester, die erhältlich sind durch Polykondensation von einem oder mehreren Diolen mit einer oder mehreren Dicarbonsäuren. Geeignete Diole sind insbesondere aliphatische C₂-C₁₀-Diole, beispielsweise Ethylenglykol, bevorzugt aliphatische C₄-C₁₀-Diole wie 1,4-Butandiol, 1,6-Hexandiol, 1,8-Octandiol und 1,10-Decandiol. Geeignete Dicarbonsäuren sind insbesondere aliphatische C₂-C₁₀-Dicarbonsäuren, beispielsweise Oxalsäure, bevorzugt aliphatische C₄-C₁₀-Dicarbonsäuren wie beispielsweise Bernsteinsäure, Glutarsäure und Adipinsäure sowie Mischungen der vorstehend genannten Dicarbonsäuren. Geeignete Dicarbonsäuren sind weiterhin aromatische Dicarbonsäuren wie Phthalsäure, Terephthalsäure und Isophthalsäure.

In einer besonders bevorzugten Ausführungsform der vorliegenden Erfindung handelt es sich bei biologisch abbaubaren Thermoplasten um Polyester, die an mindestens einer terminalen Gruppe modifiziert sind, beispielsweise durch Umsetzung mit (aa) Anhydriden, insbesondere polymeren Anhydriden wie beispielsweise Copolymeren von Ethylen mit Maleinsäureanhydrid,
(bb) Epoxiden, insbesondere Copolymeren von Ethylen mit ethylenisch ungesättigten Epoxiden wie beispielsweise Glycidyl(meth)acrylat.

Dabei ist es möglich, dass alle terminalen Gruppen von biologisch abbaubarem Thermoplast durch Umsetzung mit Anhydrid oder Epoxid vollständig oder nur partiell umgesetzt sind. Im letzteren Fall stehen die nicht umgesetzten terminalen Gruppen von biologisch abbaubarem Thermoplast für weitere chemische Umsetzungen zur Verfügung. Für den Fall, dass man einen Überschuss an Epoxid oder Anhydrid einsetzt, können die nicht umgesetzten Epoxid- oder Anhydridgruppen zu Vernetzungsreaktionen genutzt werden.

Erfindungsgemäße Verbundwerkstoffe enthalten weiterhin ein Copolymer (C).

Bei Copolymer (C) handelt es sich um statistische Copolymere.

Copolymer (C) hat ein Molekulargewicht Mₙ bis maximal 20.000 g/mol, bevorzugt 500 bis 20.000 g/mol, besonders bevorzugt 1.000 bis 15.000 g/mol.

In einer Ausführungsform der vorliegenden Erfindung weist Copolymer (C) eine kinematische Schmelzviskosität v im Bereich von 60 bis 150.000 mm²/s auf, bevorzugt von 300 bis 90.000 mm²/s, gemessen bei 120°C nach DIN 51562.

Wenn als reaktives Comonomer gewählt ist aus ethylenisch ungesättigten C₃-C₁₀-Monocarbonsäuren (b1) und ethylenisch ungesättigten C₄-C₁₀-Dicarbonsäuren oder deren Anhydriden (b2), so kann die Säurezahl von Copolymer (C) im Bereich von 1 bis 200 liegen, bevorzugt 5 bis 180 mg KOH/g, insbesondere 120 bis 180 mg KOH/g Copolymer (C), bestimmt nach DIN 53402.

In einer Ausführungsform der vorliegenden Erfindung liegen Schmelzpunkte von Copolymer(C) im Bereich von 60 bis 110°C, bevorzugt im Bereich von 75 °C bis 109°C, bestimmt durch DSC nach DIN 51007.

In einer Ausführungsform der vorliegenden Erfindung liegt Dichte von Copolymer (C) im Bereich von 0,89 bis 0,99 g/cm³, bevorzugt 0,92 bis 0,97 g/cm³, bestimmt nach DIN 53479.

Copolymer (C) ist erhältlich durch Copolymerisation von:
(a) Ethylen,
(b) mindestens einem reaktiven Comonomer, gewählt aus
   (b1) ethylenisch ungesättigten C₃-C₁₀-Monocarbonsäuren,
   (b2) ethylenisch ungesättigten C₄-C₁₀-Dicarbonsäuren oder deren Anhydriden,
   (b3) Epoxidestern von ethylenisch ungesättigten C₃-C₁₀-Monocarbonsäuren,
   (b4) Comonomeren der allgemeinen Formel I 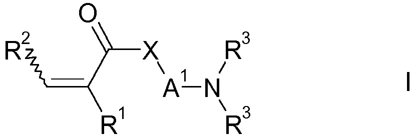 in denen die Variablen wie folgt definiert sind:
      R¹ gewählt aus Wasserstoff, unverzweigtem und verzweigtem C₁-C₁₀-Alkyl,
      R² gewählt aus Wasserstoff, unverzweigtem und verzweigtem C₁-C₁₀-Alkyl,
      R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
      X gewählt aus Sauerstoff, Schwefel und N-R⁴,
      R⁴ gewählt aus unverzweigtem und verzweigtem C₁-C₁₀-Alkyl,
      A¹ eine divalente Gruppe, gewählt aus C₁-C₁₀-Alkylen, C₄-C₁₀-Cycyloalkylen und Phenylen,
      und
(c) gegebenenfalls mindestens einem weiteren Comonomer.

Reaktive Comonomere (b) können, wenn sie in Copolymer (C) einpolymerisiert sind, Reaktionen eingehen, beispielsweise Vernetzungsreaktionen.

Als ethylenisch ungesättigte C₃-C₁₀-Monocarbonsäuren (b1) sind insbesondere α,β-ungesättigte C₃-C₁₀-Monocarbonsäuren zu nennen, beispielsweise Crotonsäure und bevorzugt (Meth)acrylsäure.

Als ethylenisch ungesättigte C₄-C₁₀-Dicarbonsäuren (b2) seien beispielsweise Itaconsäure, Metaconsäure, Citraconsäure, Fumarsäure und insbesondere Maleinsäure genannt. Als Beispiele für deren Anhydride seien Itaconsäureanhydrid und insbesondere Maleinsäureanhydrid genannt.

Als Epoxidester von ethylenisch ungesättigten C₃-C₁₀-Monocarbonsäuren (b3) seien Verbindungen genannt, die formal aus einer C₃-C₁₀-Monocarbonsäure und einem epoxidierten ungesättigten Alkohol aufgebaut sind, beispielsweise einer Verbindung der Formel II 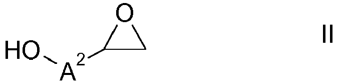 wobei A² gewählt wird aus C₁-C₄-Alkylengruppen, bevorzugt CH₂CH₂ und besonders bevorzugt CH₂.

Als Beispiele für Epoxidester von ethylenisch ungesättigten C₃-C₁₀-Monocarbonsäuren (b3) sind insbesondere Glycidylester von Crotonsäure und (Meth)acrylsäure mit A² = CH₂ genannt, bevorzugt Glycidylacrylat und insbesondere Glycidylmethacrylat.

In Comonomeren der allgemeinen Formel I (b4), kurz auch als Comonomer (b4) bezeichnet, 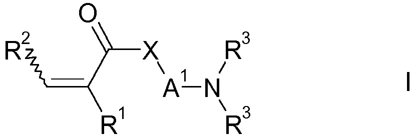 sind die Variablen wie folgt definiert:
R¹ und R² sind gleich oder verschieden;
R¹ wird gewählt aus Wasserstoff und
   unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
R² wird gewählt aus unverzweigtem und verzweigtem C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
   und ganz besonders bevorzugt Wasserstoff.
R³ sind verschieden oder vorzugsweise gleich und gewählt aus Wasserstoff
   und verzweigtem und bevorzugt unverzweigtem C₁-C₁₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; bevorzugt Methyl, Ethyl, n-Propyl, n-Butyl, n-Pentyl, iso-Pentyl, n-Hexyl, n-Heptyl, n-Octyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, ganz besonders bevorzugt Methyl;
C₃-C₁₂-Cycloalkyl wie beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl
wobei zwei Reste R³ miteinander unter Bildung eines gegebenenfalls mit C₁-C₄-Alkylresten substituierten 3- bis 10-gliedrigen, bevorzugt 5- bis 7-gliedrigen Rings verbunden sein können,
   besonders bevorzugt kann eine N(R³)₂-Gruppe gewählt sein aus

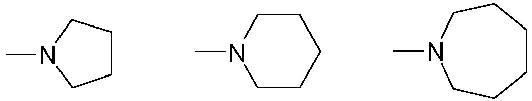

Wenn die Reste R³ verschieden sind, so kann einer der Reste R³ Wasserstoff sein.

X wird gewählt aus Schwefel, N-R⁴ und insbesondere Sauerstoff.

R⁴ wird gewählt aus unverzweigtem und verzweigtem C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;

A¹ wird gewählt aus divalenten Gruppen wie
C₁-C₁₀-Alkylen, wie beispielsweise -CH₂-, -CH(CH₃)-, -(CH₂)₂-, -CH₂-CH(CH₃)-, cis- und trans-CH(CH₃)-CH(CH₃)-, -(CH₂)₃-, -CH₂-CH(C₂H₅)-, -(CH₂)₄-, -(CH₂)₅-, -(CH₂)₆-, -(CH₂)7-, -(CH₂)₈-, -(CH₂)₉-, -(CH₂)₁₀-; vorzugsweise C₂-C₄-Alkylen; wie -(CH₂)₂-, -CH₂-CH(CH₃)-, -(CH₂)₃-, -(CH₂)₄- und -CH₂-CH(C₂H₅)-, besonders bevorzugt -(CH₂)₂-, - (CH₂)₃-, -(CH₂)₄- und ganz besonders bevorzugt -(CH₂)₂-.
C₄-C₁₀-Cycyloalkylen wie beispielsweise 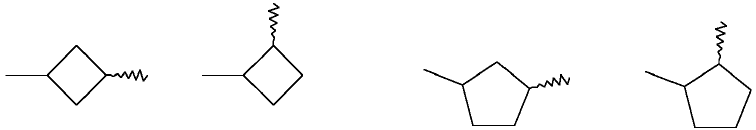 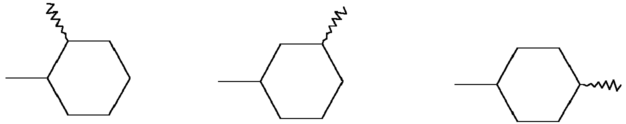 vorzugsweise 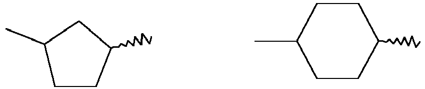 isomerenrein oder als Isomerengemisch,
und
Phenylen, beispielsweise ortho-Phenylen, meta-Phenylen und besonders bevorzugt para-Phenylen.

In einer Ausführungsform der vorliegenden Erfindung bedeutet R¹ Wasserstoff oder Methyl. Ganz besonders bevorzugt bedeutet R¹ Methyl.

In einer Ausführungsform der vorliegenden Erfindung bedeuten R¹ Wasserstoff oder Methyl und R² Wasserstoff.

In einer Ausführungsform der vorliegenden Erfindung bedeuten R¹ Wasserstoff oder Methyl und R² Wasserstoff, beide Gruppen R³ sind gleich und stehen jeweils für Methyl oder Ethyl.

In einer Ausführungsform der vorliegenden Erfindung steht X-A¹-N(R³)₂ für O-CH₂-CH₂-N(CH₃)₂.

In einer Ausführungsform der vorliegenden Erfindung steht X-A¹-N(R³)₂ für O-CH₂-CH₂-CH₂-N(CH₃)₂.

In einer Ausführungsform der vorliegenden Erfindung enthält Copolymer (C) keine weiteren Comonomere (c) einpolymerisiert.

In einer anderen Ausführungsform der vorliegenden Erfindung enthält Copolymer (C) mindestens ein weiteres Comonomer mit einpolymerisiert, gewählt aus C₁-C₂₀-Alkylestern von ethylenisch ungesättigten C₃-C₁₀-Monocarbonsäuren, kurz auch ethylenisch ungesättigte C₃-C₂₀-Carbonsäureester genannt, beispielsweise Methyl(meth)acrylat, Ethyl(meth)acrylat, n-Butyl(meth)acrylat, n-Hexyl(meth)acrylat, 2-Ethylhexyl(meth)acrylat, n-Octyl(meth)acrylat, n-Decyl(meth)acrylat, 2-Propylheptyl(meth)acrylat,
Mono- und Di-C₁-C₁₀-alkylestern von ethylenisch ungesättigten C₄-C₁₀-Dicarbonsäuren, beispielsweise Maleinsäuremono- und Dimethylester, Maleinsäuremono- und Diethylester, Fumarsäuremono- und Dimethylester, Fumarsäuremono- und Diethylester, Itaconsäuremono- und Dimethylester, Maleinsäuremono- und Di-n-butylester und Maleinsäuremono- und Di-2-ethylhexylester,
Vinylester oder Allylester von C₁-C₁₀-Carbonsäuren, bevorzugt Vinylester oder Allylester von Essigsäure oder Propionsäure, besonders bevorzugt ist Vinylpropionat und ganz besonders bevorzugt Vinylacetat.

Die Herstellung von Copolymer (C) kann nach an sich bekannten Verfahren zur Copolymerisation von Ethylen (a), reaktivem Comonomer (b) und gegebenenfalls weiteren Comonomeren (c) in gerührten Hochdruckautoklaven oder in Hochdruckrohrreaktoren erfolgen. Die Herstellung in gerührten Hochdruckautoklaven ist bevorzugt. Gerührte Hochdruckautoklaven sind bekannt, eine Beschreibung findet man beispielsweise in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokio, 1996**.**

Geeignete Druckbedingungen für die Copolymerisation sind 1000 bis 3500 bar, bevorzugt 1500 bis 2500 bar. Geeignete Reaktionstemperaturen liegen im Bereich von 160 bis 320°C, bevorzugt im Bereich von 200 bis 280°C.

Als Regler kann man beispielsweise aliphatische Aldehyde oder aliphatische Ketone der allgemeinen Formel III verwenden 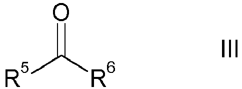 oder Mischungen derselben.

Dabei sind die Reste R⁵ und R⁶ gleich oder verschieden und ausgewählt aus Wasserstoff;
C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Dabei ist vorzugsweise ein Rest R⁵ oder R⁶ ungleich Wasserstoff.

In einer besonderen Ausführungsform sind die Reste R⁵ und R⁶ miteinander unter Bildung eines 4- bis 13-gliedrigen Rings kovalent verbunden. So können R⁵ und R⁶ beispielsweise gemeinsam sein: -(CH₂)₄-, -(CH₂)₅-, -(CH₂)6, -(CH₂)₇-, -CH(CH₃)-CH₂-CH₂-CH(CH₃)- oder -CH(CH₃)-CH₂-CH₂-CH₂-CH(CH₃)-.

Die Verwendung von Propionaldehyd (R⁵ = H, R⁶ = C₂H₅) oder Ethylmethylketon (R⁵ = CH₃, R⁶ = C₂H₅) als Regler ist ganz besonders bevorzugt.

Weitere gut geeignete Regler sind unverzweigte aliphatische Kohlenwasserstoffe wie beispielsweise Propan. Besonders gute Regler sind verzweigte aliphatische Kohlenwasserstoffe mit tertiären H-Atomen, beispielsweise Isobutan, Isopentan, Isooctan oder Isododekan (2,2,4,6,6-Pentamethylheptan). Ganz besonders geeignet ist Isododekan. Als weitere zusätzliche Regler können höhere Olefine wie beispielsweise Propylen eingesetzt werden.

Die Menge an verwendetem Regler entspricht den für das Hochdruckpolymerisationsverfahren üblichen Mengen.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus kommerziell erhältlichen Substanzen, sind
- Didekanoylperoxid, 2,5-Dimethyl-2,5-di(2-ethylhexanoylperoxy)hexan, tert.-Amylperoxypivalat, tert.-Butylperoxypivalat, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperoxy)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
- dimere oder trimere Ketonperoxide, wie aus EP-A 0 813 550 bekannt.

Als Peroxide sind Di-tert.-butylperoxid, tert.-Butylperoxypivalat, tert.-Amylperoxypivalat, tert.-Butylperoxyisononanoat oder Dibenzoylperoxid oder Gemische derselben besonders geeignet.

Als Azoverbindung sei Azobisisobutyronitril ("AIBN") beispielhaft genannt.

Der oder die Radikalstarter werden in für das Hochdruckpolymerisationsverfahren üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere Isododekan geeignet. Unter den Bedingungen der Hochdruckpolymerisation können derartige Phlegmatisierer eine molekulargewichtsregelnde Wirkung haben.

Das Mengenverhältnis der Comonomere (a), (b) und gegebenenfalls (c) bei der Dosierung entspricht üblicherweise nicht genau dem Verhältnis der Einheiten in den erfindungsgemäß verwendeten Copolymer (C), weil reaktives Comonomer (b) im Allgemeinen leichter in Copolymer (C) eingebaut werden als Ethylen (a).

Die Comonomere Ethylen (a), reaktives Comonomer (b) und gegebenenfalls weitere Comonomere (c) werden üblicherweise gemeinsam oder getrennt dosiert.

Die Comonomere Ethylen (a), reaktives Comonomer (b) und gegebenenfalls weitere Comonomere (c) können in einem Kompressor auf den Polymerisationsdruck komprimiert werden. In einer anderen Ausführungsform werden die Comonomeren zunächst mit Hilfe einer Pumpe auf einen erhöhten Druck von beispielsweise 150 bis 400 bar, bevorzugt 200 bis 300 bar und insbesondere 260 bar gebracht und danach mit einem Kompressor auf den eigentlichen Polymerisationsdruck. In einer anderen Ausführungsform der vorliegenden Erfindung werden Ethylen (a), reaktives Comonomer (b) und gegebenenfalls weitere Comonomere (c) mit einer Hochdruckpumpe direkt in den Hochdruckautoklaven dosiert.

Die Copolymerisation kann wahlweise in Abwesenheit und in Anwesenheit von Lösemitteln durchgeführt werden, wobei Mineralöle, Weißöl und andere Lösungsmittel, die während der Polymerisation im Reaktor zugegen sind und zum Phlegmatisieren des oder der Radikalstarter verwendet wurden, im Sinne der vorliegenden Erfindung nicht als Lösemittel gelten. Geeignete Lösemittel sind beispielsweise Toluol, Isododekan, Isomere des Xylols.

In erfindungsgemäßem Verbundwerkstoff enthaltenes Copolymer (C) kann als freie Säure vorliegen oder vorzugsweise in partiell oder vollständig neutralisierter Form. Beispielsweise kann Copolymer (C) partiell oder vollständig neutralisiert sein mit Hydroxid und/oder Carbonat und/oder Hydrogencarbonat von Erdalkalimetal oder vorzugsweise Alkalimetall, beispielsweise Natriumhydroxid, Kaliumhydroxid, Natriumcarbonat, Kaliumcarbonat, Natriumhydrogencarbonat, Kaliumhydrogencarbonat, oder vorzugsweise mit einem oder mehreren Aminen wie beispielsweise Ammoniak und organischen Aminen wie beispielsweise Alkylaminen, N-Alkylethanolaminen, Alkanolaminen und Polyaminen. Beispielhaft für Alkylamine seien genannt: Triethylamin, Diethylamin, Ethylamin, Trimethylamin, Dimethylamin, Methylamin, Piperidin, Morpholin. Bevorzugte Amine sind Monoalkanolamine, N,N-Dialkylalkanolamine, N-Alkylalkanolamine, Dialkanolamine, N-Alkylalkanolamine und Trialkanolamine mit jeweils 2 bis 18 C-Atomen im Hydroxyalkylrest und gegebenenfalls jeweils 1 bis 6 C-Atomen im Alkylrest, bevorzugt 2 bis 6 C-Atomen im Alkanolrest und gegebenenfalls 1 oder 2 C-Atomen im Alkylrest. Ganz besonders bevorzugt sind Ethanolamin, Diethanolamin, Triethanolamin, Methyldiethanolamin, n-Butyldiethanolamin, N,N-Dimethylethanolamin und 2-Amino-2-methylpropanol-1. Ganz besonders bevorzugt sind Ammoniak und N,N-Dimethylethanolamin. An Polyaminen seien beispielhaft genannt: Ethylendiamin, Tetramethylethylendiamin (TMEDA), Diethylentriamin und Triethylentetramin.

Im Kontext der vorliegenden Erfindung umfassen erfindungsgemäße Verbundwerkstoffe
im Bereich von 30 bis 90 Gew.-%, bevorzugt 40 bis 85 Gew.-% natürliche Fasern (A),
im Bereich von 9 bis 69 Gew.-%, bevorzugt 12 bis 57 thermoplastisches Polymer (B),
im Bereich von 1 bis 10 Gew.-%, bevorzugt 3 bis 5 Gew.-% Copolymer (C).

Dabei sind Angaben in Gew.-% jeweils auf gesamten erfindungsgemäßen Verbundwerkstoff bezogen.

Im Kontext der vorliegenden Erfindung enthält Copolymer (C) einpolymerisiert:
(a) 60 bis 98 Gew.-%, bevorzugt 70 bis 97 Gew.-% Ethylen,
(b) 2 bis 40 Gew.-%, bevorzugt 3 bis 30 Gew.-% reaktives Comonomer, gewählt aus
   (b1) ethylenisch ungesättigten C₃-C₁₀-Monocarbonsäuren,
   (b2) ethylenisch ungesättigten C₄-C₁₀-Dicarbonsäuren oder deren Anhydriden,
   (b3) Epoxidestern von ethylenisch ungesättigten C₃-C₁₀-Monocarbonsäuren,
   (b4) Comonomeren der allgemeinen Formel I 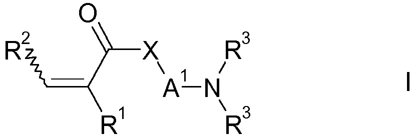 in denen die Variablen wie folgt definiert sind:
      R¹ gewählt aus Wasserstoff, unverzweigtem und verzweigtem C₁-C₁₀-Alkyl,
      R² gewählt aus Wasserstoff, unverzweigtem und verzweigtem C₁-C₁₀-Alkyl,
      R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
      X gewählt aus Sauerstoff, Schwefel und N-R⁴,
      R⁴ gewählt aus unverzweigtem und verzweigtem C₁-C₁₀-Alkyl,
      A¹ eine divalente Gruppe, gewählt aus C₁-C₁₀-Alkylen, C₄-C₁₀-Cycyloalkylen und Phenylen,
   und
(c) null bis 30 Gew.-%, bevorzugt 0,1 bis 30 Gew.-% ein oder mehrere weitere Comonomere.
Dabei sind Angaben in Gew.-% jeweils auf gesamtes Copolymer (C) bezogen.

In einer bevorzugten Ausführungsform der vorliegenden Erfindung, in der reaktives Comonomer gewählt wird aus ethylenisch ungesättigten C₃-C₁₀-Monocarbonsäuren (b1) und ethylenisch ungesättigten C₄-C₁₀-Dicarbonsäuren oder deren Anhydriden (b2), enthält Copolymer (C) maximal 10 Gew.-% weiteres Comonomer (c) einpolymerisiert.

Erfindungsgemäße Verbundwerkstoffe weisen eine vorzügliche Witterungsbeständigkeit auf, weiterhin einen hervorragenden Griff und sehr gute mechanische Eigenschaften. Außerdem sind die thermischen Eigenschaften sehr gut.

In einer Ausführungsform der vorliegenden Erfindung umfassen erfindungsgemäße Verbundwerkstoffe mindestens ein Additiv (D). Beispiele für Additive (D) sind beispielsweise Stabilisatoren, insbesondere Licht- und UV-Stabilisatoren, beispielsweise sterisch gehinderte Amine (HALS), 2,2,6,6-Tetramethylmorpholin-N-Oxide oder 2,2,6,6-Tetramethylpiperidin-N-Oxide (TEMPO) und andere N-Oxydderivate wie NOR. Weitere Beispiele für geeignete Additive (D) sind UV-Absorber wie beispielsweise Benzophenon oder Benzotriazole. Weitere Beispiele für geeignete Additive (D) sind Pigmente, die ebenfalls eine Stabilisierung gegen UV-Licht bewirken können, wie beispielsweise Titandioxid, Ruß, Eisenoxid, andere Metalloxide und organische Pigmente, beispielsweise Azo- und Phthalocyanin-Pigmente. Weitere Beispiele für geeignete Additive (D) sind Biozide, insbesondere Fungizide. Weitere Beispiele für geeignete Additive (D) sind Säurefänger, beispielsweise Erdalkalihydroxide oder Erdalkalioxide oder Fettsäuresalze von Metallen, insbesondere Metallstearate, besonders bevorzugt Zinkstearat und Calciumstearat, und weiterhin Kreide und Hydrotalcite. Dabei können einige Fettsäuresalze von Metallen, insbesondere Zinkstearat und Calciumstearat, auch als Schmiermittel bei der Verarbeitung wirken.

Weitere Beispiele für Additive (D) sind Antioxidantien wie auf Basis von Phenolen, wie alkylierte Phenole, Bisphenole, bicyclische Phenole oder Antioxidantien auf Basis von Benzofuranonen, organischen Sulfiden und/oder Diphenylaminen. Weitere Beispiele für geeignete Additive (D) sind Weichmacher wie Phthalate, organische Phosphate, Ester von Dicarbonsäuren, Polyester und Polyglycolderivate. Weitere Beispiele für geeignete Additive (D) sind Schlagzähmodifikatoren und Flammschutzmittel.

Ein weiterer Gegenstand der vorliegenden Erfindung ist ein Verfahren zur Herstellung von erfindungsgemäßen Verbundwerkstoffen, im Rahmen der vorliegenden Erfindung auch erfindungsgemäßes Herstellungsverfahren genannt. Das erfindungsgemäße Herstellungsverfahren ist dadurch gekennzeichnet, dass man natürliche Fasern (A), geschmolzenes thermoplastisches Polymer (B) und geschmolzenes oder dispergiertes, beispielsweise emulgiertes Copolymer (C) miteinander vermischt. Zum Vermischen kann man sich aller gängigen Mischapparaturen, die zum Verarbeiten von Polymerschmelzen geeignet sind, bedienen, beispielsweise Knetern oder Extrudern.

In einer Ausführungsform der vorliegenden Erfindung geht man so vor, dass man zur Herstellung von erfindungsgemäßen Verbundwerkstoffen von getrockneten oder vorgetrockneten natürlichen Fasern (A), insbesondere von getrocknetem oder vorgetrocknetem Holz in faseriger Form ausgeht, beispielsweise von Cellulosefasern mit einem Wassergehalt bis maximal 1 Gew.-%, bezogen auf gesamte eingesetzte natürliche Fasern (A).

In einer Ausführungsform der vorliegenden Erfindung führt man das Vermischen in einem Extruder durch, beispielsweise in einem gleichläufigen oder gegenläufigen Doppelschneckenextruder.

In einer Ausführungsform der vorliegenden Erfindung werden natürliche Fasern (A), thermoplastisches Polymer (B), Copolymer (C) und gegebenenfalls ein oder mehrere Additive (D) in einer Direktextrusion dem Extruder zugeführt, aufgeschmolzen, gemischt und zum fertigen Halbzeug aus erfindungsgemäßem Verbundwerkstoff verarbeitet.

Beispiele für Halbzeuge sind Gebäudeinnenteile, Gebäudeaußenteile, Profilteile, Möbel und Hohlkörper.

In einer anderen Ausführungsform der vorliegenden Erfindung werden natürliche Fasern (A), thermoplastisches Polymer (B), Copolymer (C) und gegebenenfalls ein oder mehrere Additive (D) durch Vermischen zunächst zu einem erfindungsgemäßen Verbundwerkstoff verarbeitet, das beispielsweise in Granulatform anfällt, und danach beispielsweise zu einem oder mehreren Halbzeugen verarbeitet.

Ein weiterer Gegenstand der vorliegenden Erfindung ist die Verwendung von erfindungsgemäßen Verbundwerkstoffen als oder zur Herstellung von Gebäudeinnen- oder außenteilen oder von Profilteilen. Beispiele für Gebäudeinnenteile sind Geländer beispielsweise für Treppen im Innenraum und Paneele. Beispiele für Gebäudeaußenteile sind Dächer, Fassaden, Fensterrahmen, Veranden, Geländer für Außentreppen, Terrassendielen und Verkleidungen beispielsweise für Gebäude oder Gebäudeteile. Beispiele für Profilteile sind technische Profile, Formteile für Innenanwendungen wie beispielsweise Formteile mit komplexen Geometrien, Multifunktionsprofile oder Verpackungsteile und Dekorationsteile, Möbelprofile und Bodenprofile.

Ein weiterer Gegenstand der vorliegenden Erfindung ist die Verwendung von erfindungsgemäßen Verbundwerkstoffen als oder zur Herstellung von Möbeln, beispielsweise von Tischen, Stühlen, insbesondere Gartenmöbeln und Bänken wie beispielsweise Parkbänken, zur Herstellung von Profilteilen und zur Herstellung von Hohlkörpern wie beispielsweise Hohlkammerprofilen für Terrassendielen oder Fensterbänken. Ein weiterer Gegenstand der vorliegenden Erfindung ist ein Verfahren zur Herstellung von Gebäudeaußenteilen, Möbeln, Profilteilen oder Hohlkörpern unter Verwendung von mindestens einem erfindungsgemäßen Verbundwerkstoff.

Ein weiterer Gegenstand der vorliegenden Erfindung sind Gebäudeinnenteile und Gebäudeaußenteile, Profilteile, Möbel und Hohlkörper, hergestellt unter Verwendung von mindestens einem erfindungsgemäßen Verbundwerkstoff.

Erfindungsgemäße Gebäudeaußenteile und Bänke zeigen vorzügliche Witterungsbeständigkeit auf, weiterhin einen hervorragenden Griff und sehr gute mechanische Eigenschaften wie beispielsweise Schlagzähigkeit, guten Biege-E-Modul und eine geringe Wasseraufnahme, was zu einer guten Witterungsabhängigkeit führt. Außerdem sind die thermischen Eigenschaften sehr gut. Weiterhin haben sie eine holzähnliches, ästhetisches Aussehen.

Die Erfindung wird durch Beispiele erläutert.

### I. Herstellung von Copolymeren (C)

In einem Hochdruckautoklaven, wie er in der Literatur beschrieben ist (M. Buback et al., Chem. Ing. Tech. 1994, 66, 510), wurden Ethylen und Comonomer, gewählt aus Glycidylmethacrylat (b3.1), Methacrylsäure (b1.1) oder Maleinsäureanhydrid (b2.1) gemäß Tabelle 1 copolymerisiert. Dazu wurde Ethylen in der in Tabelle 1 angegebenen Menge unter dem Reaktionsdruck von 1700 bar in den Hochdruckautoklaven eingespeist. Getrennt davon wurden in den Beispielen (C.1) bis (C.9) sowie (C.11) die in Tabelle 1 angegebene Menge Comonomer zunächst auf einen Zwischendruck von 260 bar verdichtet und anschließend unter dem Reaktionsdruck von 1700 bar eingespeist. Getrennt davon wurde Initiatorlösung, bestehend aus tert.-Amylperoxypivalat in den Beispielen (C.1) bis (C.10) in Isododekan bzw. tert.-Butylperoxypivalat in Isododekan im Falle von Beispiel (C.11) (Menge und Konzentration s. Tabelle 1), unter dem Reaktionsdruck von 1700 bar in den Hochdruckautoklaven eingespeist. Getrennt davon wurde die in Tabelle 1 angegebene Menge Regler, bestehend aus Propionaldehyd in Isododekan, Konzentration s. Tabelle 1, zunächst auf einen Zwischendruck von 260 bar verdichtet und anschließend mit Hilfe eines weiteren Kompressors in den Hochdruckautoklaven eingespeist. Die Reaktionstemperatur betrug 220°C. Man erhielt Copolymere (C.1) bis (C.11) gemäß Tabelle 1 mit den aus der Tabelle 2 ersichtlichen analytischen Daten. Die Molekulargewichte Mₙ von den Copolymeren (C.1) bis (C.11) lagen jeweils unter 20.000 g/mol.

**Tabelle 1: Herstellung von erfindungsgemäß verwendeten Copolymeren (C.1) bis C.11)**

| Nr. | Ethylen [kg/h] | GMA [l/h] | PA in ID [ml/h] | c(PA) | PO in ID [l/h] | c(PO) | Umsatz [%] | Austrag (C) [kg/h] |
|---|---|---|---|---|---|---|---|---|
| (C.1) | 12 | 0,18 | 300 | 1 | 0,99 | 0,008 | 15 | 1,9 |
| (C.2) | 12 | 0,18 | 960 | 0,2 | 1,25 | 0,008 | 16 | 2,2 |
| (C.3) | 12 | 0,18 | 540 | 0,2 | 1,96 | 0,006 | 15 | 2,0 |
| (C.4) | 12 | 0,30 | 310 | 1 | 1,38 | 0,008 | 15 | 2,1 |
| (C.5) | 12 | 0,30 | 950 | 0,2 | 1,55 | 0,006 | 15 | 2,1 |
| (C.6) | 12 | 0,30 | 540 | 0,2 | 1,41 | 0,006 | 15 | 2,1 |
| (C.7) | 12 | 0,44 | 320 | 1 | 1,51 | 0,011 | 15 | 2,1 |
| (C.8) | 12 | 0,47 | 990 | 0,2 | 1,93 | 0,008 | 17 | 2,5 |
| (C.9) | 12 | 0,46 | 510 | 0,2 | 1,60 | 0,006 | 17 | 2,4 |

| Nr. | Ethylen [kg/h] | MSA-Lsg. [l/h] | PA in ID [ml/h] | c(PA) | PO in ID [l/h] | c(PO) | Umsatz [%] | Austrag (C.10) [kg/h] |
|---|---|---|---|---|---|---|---|---|
| (C.10) | 10,6 | 1,2 | 0 | - | 2,02 | 0,06 | 17 | 2,0 |

| Nr. | Ethylen [kg/h] | MAS [l/h] | PA in ID [ml/h] | c(PA) | PO in ID [l/h] | c(PO) | Umsatz [%] | Austrag (C) [kg/h] |
|---|---|---|---|---|---|---|---|---|
| C.11) | 12 | 0,72 | 0 | - | 1,18 | 0,0 | 18 | 2,9 |

| | | | | | | | | |
|---|---|---|---|---|---|---|---|---|
| Anmerkung: Im Falle der Herstellung von (C.10) wurde die in der Tabelle angegebenen Menge MSA-Lsg. (Maleinsäureanhydrid) als 40 Gew.-% Lösung in Ethylmethylketon mit einer Hochdruckpumpe auf 1700 bar komprimiert und separat in den Hochdruckautoklaven eingespeist. Anmerkungen zu Tabelle 1: Die Reaktortemperatur betrug 220°C, GMA = Glycidylmethacrylat; zur Herstellung von (C.1) bis (C.3) wurde GMA als Lösung in Toluol (v/v 1:1) zugegeben (Angaben der GMA-Dosiermengen beziehen sich auf GMA ohne Lösungsmittel), zur Herstellung von (C.4) bis (C.9) wurde GMA in Substanz zugegeben. PO: tert.-Amylperoxypivalat, c(PA): Konzentration von PA in ID in Volumenanteilen, 1: reiner PA, c(PO): Konzentration von PO in ID in mol/l Der Umsatz bezieht sich auf Ethylen. | | | | | | | | |

**Tabelle 2: Analytische Daten der erfindungsgemäß verwendeten Copolymere (C)**

| Nr. | Gehalt Ethylen [Gew.-%] | Gehalt GMA [Gew.-%] | v [mm²/s] | Tₘₑₗₜ [°C] | ρ [g/cm³] |
|---|---|---|---|---|---|
| (C.1) | 91,8 | 8,2 | 1030 | 104,0 | 0,9422 |
| (C.2) | 91,1 | 8,9 | 4700 | 104,5 | 0,9389 |
| (C.3) | 92,1 | 7,9 | 25100 | 105,1 | 0,9359 |
| (C.4) | 88,0 | 12,0 | 1060 | 101,1 | 0,9452 |
| (C.5) | 88,2 | 11,8 | 5030 | 102,1 | 0,9434 |
| (C.6) | 87,2 | 12,8 | 27000 | 101,6 | 0,9421 |
| (C.7) | 83,2 | 16,8 | 950 | 96,9 | 0,9491 |
| (C.8) | 82,0 | 18,0 | 5100 | 96,9 | 0,9482 |
| (C.9) | 83,5 | 16,5 | 26700 | 96,6 | 0,9489 |

| Nr. | Gehalt Ethylen [Gew.-%] | Gehalt MSA [Gew.-%] | v [mm²/s] | Tₘₑₗₜ [°C] | ρ [g/cm³] |
|---|---|---|---|---|---|
| (C.10) | 89,9 | 10,1 | 1020 | n.b. | n.b. |

| Nr. | Gehalt Ethylen [Gew.-%] | Gehalt MAS [Gew.-%] | v [mm²/s] | Tₘₑₗₜ [°C] | ρ [g/cm³] |
|---|---|---|---|---|---|
| C.11) | 72,8 | 27,2 | n.b. | 79,3 | 0,961 |

| | | | | | |
|---|---|---|---|---|---|
| v: dynamische Schmelzeviskosität, gemessen bei 120°C nach DIN 51562, Der Gehalt an Ethylen und Glycidylmethacrylat in den erfindungsgemäß verwendeten Copolymeren (C.1) bis (C.9) wurde IR-spektroskopisch bestimmt. Hierfür wurde eine IR-Eichkurve aus NMR-spektroskopisch gewonnenen Daten erstellt. Die Dichte wurde bestimmt nach DIN 53479. Der Schmelzbereich wurde bestimmt durch DSC (Differential scanning calorimetry, Differentialthermoanalyse) nach DIN 51007 bestimmt. Der Gehalt an Ethylen und Maleinsäureanhydrid bzw. Methacrylsäure in den erfindungsgemäß verwendeten Copolymeren (C.10) und (C.11) wurde NMR-spektroskopisch bestimmt. Die Säurezahl des erfindungsgemäß verwendeten Copolymeren (C.11) wurde nach DIN 53402 bestimmt und betrug 170 mg KOH/g (C.11). Der MFR (Schmelzeflussrate) von Copolymer (C.11) betrug 10,3 g/10 min, bestimmt bei einer Belastung von 325 g bei einer Temperatur von 160°C. | | | | | |

### Extrusionsversuche und Prüfungen:

### Eingesetzte Materialien:

Als thermoplastisches Polymer (B.1) wurde HDPE vom Typ Sabic® HDPE M30053S (Schmelzindex, gemessen bei 190°C und 2,16 kg (MFR) = 3,5 dg/min, Dichte = 953 kg/m³ und Schmelzpunkt (DSC-Test nach DIN 53765) = 132°C
und als natürliche Fasern (A.1) Holzfasern Weichholzfasern von Nadelhölzern mit Partikelmaßen von 0,7 - 1,2 mm, einer Schüttgutdichte von 100 - 170 g/Liter und einem Rückstand von ca. 0,5 % nach vierstündiger Behandlung bei 850°C, kommerziell erhältlich als Lignocel® Grade F9 von JRS (Rettenmaier & Söhne GmbH + Co) eingesetzt. Der Holzfaseranteil betrug in allen Mischungen 75 Gew.-%.
Als Vergleich (V-C.12) wurde ein kommerziell verfügbares PE-g-MSA (Licocene® PE MA 4351 von Clariant) eingesetzt.
Als Zusatz (D.1) wurde ein Verarbeitungshilfsmittel (Gleitmittel) gegebenenfalls Calciumstearat zugegeben.

Herstellung von erfindungsgemäßen Verbundwerkstoffen bzw. Vergleichsmaterialien in Form von Profilen:
Profile aus erfindungsgemäßen Verbundwerkstoffen bzw. Vergleichsmaterialien wurden auf einem gegenläufigen Doppelschneckenextruder (Typ DS 7.22D der Firma Weber Maschinenfabrik) hergestellt. (A.1), (B.1) das betreffende Copolymer (C) gemäß Tabelle 3 sowie gegebenenfalls das Verarbeitungshilfsmittel (D.1) wurden im Haupteinzug des Extruders hinzugegeben und in einem Direktextrusionsverfahrensschritt zum fertigen Profil verarbeitet. Der Extruder wurde mit 20 Umdrehungen pro Minute und einem Durchsatz von 40 kg/h betrieben. Das Temperaturprofil bei der Extrusion betrug in Richtung des Massestroms von T1 bis T12 in den Zonen T1 und T2 190°C, in den Zonen T3 bis T5 180°C, in den Zonen T6 bis T11 170°C und in der Zone T12 40°C. Unter den Zonen T1 bis T12 sind von T1 bis T5 die Temperaturen im Zylinder, von T6 und T7 die Temperaturen im Adapterflansch, von T8 bis T11 die Temperaturen im Werkzeug und von T12 die Temperatur der Kühlplatten am Ende des Werkzeugs gemeint.
Bei den hergestellten Profilen handelt es sich um Fassadenverkleidungsprofile mit einer Hohlkammerprofilgeometrie, Nut und Feder (s. Abb).

**Tabelle 3: Zusammensetzung von erfindungsgemäßen Verbundwerkstoffen und Vergleichsmaterialien**

| Versuch | (A.1) [Gew.-%] | (B.1) [Gew.-%] | Anteil (C) | (D.1) [Gew.-%] |
|---|---|---|---|---|
| V-VW.1 | 75 | 25 | 0 | 0 |
| V-VW.2 | 75 | 24 | 0 | 1 |
| V-VW.3 | 75 | 21 | 3 Gew.-% (V-C.12) | 1 |
| VW.4 | 75 | 21 | 3 Gew.-% (C.3) | 1 |
| VW.5 | 75 | 23 | 1 Gew.-% (C.5) | 1 |
| VW.6 | 75 | 21 | 3 Gew.-% (C.5) | 1 |
| VW.7 | 75 | 21 | 3 Gew.-% (C.6) | 1 |
| VW.8 | 75 | 21 | 3 Gew.-% (C.10) | 1 |
| VW.9 | 75 | 21 | 3 Gew.-% (C.11) | 1 |

Tabelle 3: (V-C.3) Polyethylenwachs, mit Maleinsäureanhydrid gepfropft, kommerziell erhältlich als Licocene® PE MA 4351

### Prüfkörper und Prüfungen :

Die untersuchten Prüfkörper wurden aus den wie vorstehend hergestellten Profilen herausgesägt. Die Maße der Prüfkörper betrugen 80 mm x 10 mm x 4 mm.

**Tabelle 4: Durchgeführte Prüfungen mit den Prüfkörpern aus Zusammensetzung von erfindungsgemäßen Verbundwerkstoffen und Vergleichsmaterialien**

| Probekörper | Biegefestigkeit [MPa] | Biege-E-Modul [MPa] | Schlagzähigkeit [N/m²] | Wasseraufnahme nach 24 h [%] | Δ-Breite [%] | Δ-Dicke [%] |
|---|---|---|---|---|---|---|
| V-VW.1 | 17,53 ± 0,73 | 2346 ± 124 | 2,03 ± 0,27 | 16,09 | 3,36 | 4,14 |
| V-VW.2 | 16,02 ± 0,33 | 2202 ± 51 | 2,48 ± 0,21 | 14,92 | 3,28 | 4,17 |
| V-VW.3 | 23,64 ± 0,21 | 3488 ± 133 | 2,82 ± 0,26 | 9,14 | 1,29 | 3,19 |
| VW.4 | 28,09 ± 1,71 | 3898 ± 140 | 3,46 ± 0,32 | 6,83 | 1,07 | 3,20 |
| VW.5 | 25,01 ± 0,25 | 4135 ± 19 | 2,55 ± 0,18 | 11,58 | 3,00 | 5,35 |
| VW.6 | 25,83 ± 0,73 | 3894 ± 99 | 2,96 ± 0,35 | 8,68 | 2,23 | 3,15 |
| VW.7 | 29,88 ± 1,42 | 3686 ± 74 | 4,08 ± 0,57 | 6,18 | 1,02 | 3,60 |
| VW.8 | 29,41 ± 0,98 | 3937 ± 136 | 3,56 ± 0,38 | 5,26 | 1,02 | 1,85 |
| VW.9 | 35,05 ± 1,50 | 3375 ± 276 | 3,70 ± 0,22 | 7,06 | 1,12 | 3,95 |

Tabelle 4: Die Messergebnisse sind Mittelwerte aus je 5 gemessenen Prüfkörpern. Die Biegeprüfungen wurden nach DIN EN ISO 178, die Schlagprüfung (Typ Charpy, ungekerbt) nach DIN EN ISO 179eU und die Wasseraufnahme nach DIN EN ISO 62 durchgeführt; Maßänderungen (Δ-Breite und Δ-Dicke) durch Wasseraufnahme nach 24 h Lagerung im Wasser bei 23° ± 2°C ermittelt.

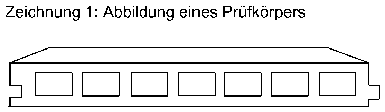

## Patentansprüche

1. Verbundwerkstoff, umfassend
(A) 30 bis 90 Gew.-% natürliche Fasern,
(B) 9 bis 69 Gew.-% mindestens eines thermoplastischen Polymers,
(C) 1 bis 10 Gew.-% mindestens eines statistischen Copolymers mit einem Molekulargewicht Mₙ bis maximal 20.000 g/mol, erhältlich durch Copolymerisation von
(a) 60 bis 98 Gew.-% Ethylen,
(b) 2 bis 40 Gew. % mindestens eines reaktiven Comonomers, gewählt aus
(b1) ethylenisch ungesättigten C₃-C₁₀-Monocarbonsäuren,
(b2) ethylenisch ungesättigten C₄-C₁₀-Dicarbonsäuren oder deren Anhydriden,
(b3) Epoxidestern von ethylenisch ungesättigten C₃-C₁₀-Monocarbonsäuren,
(b4) Comonomeren der allgemeinen Formel I 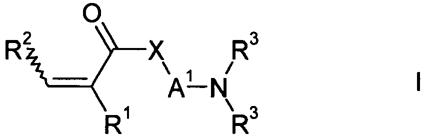 in denen die Variablen wie folgt definiert sind:
R¹ gewählt aus Wasserstoff, unverzweigtem und verzweigtem C₁-C₁₀-Alkyl,
R² gewählt aus Wasserstoff, unverzweigtem und verzweigtem C₁-C₁₀-Alkyl,
R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
X gewählt aus Sauerstoff, Schwefel und N-R⁴,
R⁴ gewählt aus unverzweigtem und verzweigtem C₁-C₁₀-Alkyl,
A¹ eine divalente Gruppe, gewählt aus C₁-C₁₀-Alkylen, C₄-C₁₀-Cycyloalkylen und Phenylen,
und
(c) gegebenenfalls mindestens einem weiteren Comonomer.

2. Verbundwerkstoff nach Anspruch 1, **dadurch gekennzeichnet, dass** natürliche Fasern gewählt werden aus Cellulosefasern und oder lignocellulosehaltigen Fasern.

3. Verbundwerkstoff nach Anspruch 1 oder 2, **dadurch gekennzeichnet, dass** natürliche Fasern gewählt werden aus Holzfasern.

4. Verbundwerkstoff nach einem der Ansprüche 1 bis 3, **dadurch gekennzeichnet, dass** thermoplastische Polymere (B) ausgewählt werden aus Polyethylen, Polypropylen und Polyvinylchlorid.

5. Verbundwerkstoff nach einem der Ansprüche 1 bis 4, **dadurch gekennzeichnet, dass** thermoplastisches Polymer (B) gewählt wird aus biologisch abbaubaren Thermoplasten, wobei die biologische Abbaubarkeit gemäß DIN EN 13432 (Dezember 2000) bestimmt wird und der Abbau mindestens 90 % innerhalb von 6 Monaten beträgt.

6. Verbundwerkstoff nach einem der Ansprüche 1 bis 5, **dadurch gekennzeichnet, dass** Copolymer (C) gewählt wird aus Copolymeren, die als weiteres Comonomer (c) Vinylacetat oder einen ethylenisch ungesättigten C₃-C₂₀-Carbonsäureester einpolymerisiert enthalten.

7. Verbundwerkstoff nach einem der Ansprüche 1 bis 6, **dadurch gekennzeichnet, dass** er umfasst:
im Bereich von 40 bis 85 Gew.-% natürliche Fasern (A),
im Bereich von 12 bis 57 Gew.-% thermoplastisches Polymer (B),
im Bereich von 3 bis 5 Gew.-% Copolymer (C).

8. Verbundwerkstoff nach einem der Ansprüche 1 bis 7, **dadurch gekennzeichnet, dass** Copolymer (C) einpolymerisiert enthält:
(a) 70 bis 97 Gew.-% Ethylen,
(b) 3 bis 30 Gew.-% mindestens eines reaktiven Comonomers, gewählt aus
(b1) ethylenisch ungesättigten C₃-C₁₀-Monocarbonsäuren,
(b2) ethylenisch ungesättigten C₄-C₁₀-Dicarbonsäuren oder deren Anhydriden,
(b3) Epoxidestern von ethylenisch ungesättigten C₃-C₁₀-Monocarbonsäuren,
(b4) Comonomeren der allgemeinen Formel I 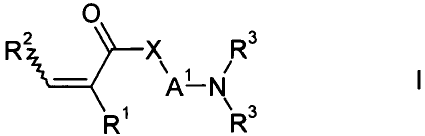 in denen die Variablen wie folgt definiert sind:
R¹ gewählt aus Wasserstoff, unverzweigtem und verzweigtem C₁-C₁₀-Alkyl,
R² gewählt aus Wasserstoff, unverzweigtem und verzweigtem C₁-C₁₀-Alkyl,
R³ gleich oder verschieden und gewählt aus Wasserstoff und unverzweigtem und verzweigtem C₁-C₁₀-Alkyl und C₃-C₁₂-Cycloalkyl, wobei zwei Reste R³ miteinander unter Bildung eines 3 bis 10-gliedrigen Rings verbunden sein können,
X gewählt aus Sauerstoff, Schwefel und N-R⁴,
R⁴ gewählt aus unverzweigtem und verzweigtem C₁-C₁₀-Alkyl,
A¹ eine divalente Gruppe, gewählt aus C₁-C₁₀-Alkylen, C₄-C₁₀-Cycyloalkylen und Phenylen,
und
(c) null bis 30 Gew.-% ein oder mehrere weitere Comonomere.

9. Verfahren zur Herstellung von Verbundwerkstoffen nach einem der Ansprüche 1 bis 8, **dadurch gekennzeichnet, dass** man natürliche Fasern (A), geschmolzenes thermoplastisches Polymer (B) und geschmolzenes oder dispergiertes Copolymer (C) miteinander vermischt.

10. Verfahren nach Anspruch 9, **dadurch gekennzeichnet, dass** man das Vermischen in einem Extruder durchführt.

11. Verwendung von Verbundwerkstoffen nach einem der Ansprüche 1 bis 8 als oder zur Herstellung von Gebäudeaußenteilen, Gebäudeinnenteilen, Profilteilen, Möbeln oder Hohlkörpern.

12. Verfahren zur Herstellung von Gebäudeaußenteilen, Gebäudeinnenteilen, Profilteilen, Möbeln oder Hohlkörpern unter Verwendung von mindestens einem Verbundwerkstoff nach einem der Ansprüche 1 bis 8.

13. Gebäudeaußenteile, Gebäudeinnenteile, Profilteile, Möbel oder Hohlkörper, umfassend oder hergestellt unter Verwendung von mindestens einem Verbundwerkstoff nach einem der Ansprüche 1 bis 8.

## Claims

1. A composite, comprising
(A)from 30 to 90% by weight of natural fibers,
(B)from 9 to 69% by weight of at least one thermoplastic polymer,
(C) from 1 to 10% by weight of at least one random copolymer whose molar mass Mₙ is up to at most 20 000 g/mol, obtainable via copolymerization of
(a) from 60 to 98% by weight of ethylene,
(b) from 2 to 40% by weight of at least one reactive comonomer, selected from
(b1) ethylenically unsaturated C₃-C₁₀ monocarboxylic acids,
(b2) ethylenically unsaturated C₄-C₁₀ dicarboxylic acids or their anhydrides,
(b3) epoxy esters of ethylenically unsaturated C₃-C₁₀ monocarboxylic acids,
(b4) comonomers of the general formula I 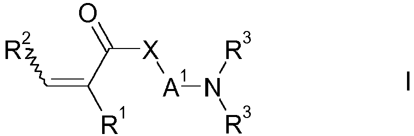 in which the definitions of the variables are as follows:
R¹ is selected from hydrogen and unbranched and branched C₁-C₁₀-alkyl,
R² is selected from hydrogen and unbranched and branched C₁-C₁₀-alkyl,
R³ is identical or different and is selected from hydrogen and unbranched and branched C₁-C₁₀-alkyl and C₃-C₁₂-cycloalkyl, where two radicals R³ can have been bonded to one another to form a 3-10-membered ring,
X is selected from oxygen, sulfur and N-R⁴,
R⁴ is selected from unbranched and branched C₁-C₁₀-alkyl,
A¹ is a divalent group selected from C₁-C₁₀-alkylene, C₄-C₁₀-cycloalkylene, and phenylene,
and
(c) optionally at least one further comonomer.

2. The composite according to claim 1, wherein natural fibers are selected from cellulose fibers and or lignocellulose-containing fibers.

3. The composite according to claim 1 or 2, wherein natural fibers are selected from wood fibers.

4. The composite according to any of claims 1 to 3, wherein thermoplastic polymers (B) are selected from polyethylene, polypropylene, and polyvinyl chloride.

5. The composite according to any of claims 1 to 4, wherein thermoplastic polymer (B) is selected from biodegradable thermoplastics, where the biodegradability is determined according to DIN EN 13432 (December 2000) and the degradation is at least 90% within 6 months.

6. The composite according to any of claims 1 to 5, wherein copolymer (C) is selected from copolymers which comprise, as further comonomer (c) incorporated into the polymer, vinyl acetate or an ethylenically unsaturated C₃-C₂₀ carboxylic ester.

7. The composite according to any of claims 1 to 6, which comprises:
an amount of natural fibers (A) in the range from 40 to 85% by weight,
an amount of thermoplastic polymer (B) in the range from 12 to 57% by weight,
an amount of copolymer (C) in the range from 3 to 5% by weight.

8. The composite according to any of claims 1 to 7, wherein copolymer (C) comprises, incorporated into the polymer:
(a) from 70 to 97% by weight of ethylene,
(b) from 3 to 30% by weight of at least one reactive comonomer, selected from
(b1) ethylenically unsaturated C₃-C₁₀ monocarboxylic acids,
(b2) ethylenically unsaturated C₄-C₁₀ dicarboxylic acids or their anhydrides,
(b3) epoxy esters of ethylenically unsaturated C₃-C₁₀ monocarboxylic acids,
(b4) comonomers of the general formula I 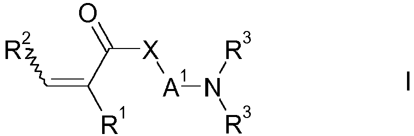 in which the definitions of the variables are as follows:
R¹ is selected from hydrogen and unbranched and branched C₁-C₁₀-alkyl,
R² is selected from hydrogen and unbranched and branched C₁-C₁₀-alkyl,
R³ is identical or different and is selected from hydrogen and unbranched and branched C₁-C₁₀-alkyl and C₃-C₁₂-CyCloalkyl, where two radicals R³ can have been bonded to one another to form a 3-10-membered ring,
X is selected from oxygen, sulfur and N-R⁴,
R⁴ is selected from unbranched and branched C₁-C₁₀-alkyl,
A¹ is a divalent group selected from C₁-C₁₀-alkylene, C₄-C₁₀-cycloalkylene, and phenylene,
and
(c) from zero to 30% by weight of one or more further comonomers.

9. A process for the production of composites according to any of claims 1 to 8, which comprises mixing natural fibers (A), molten thermoplastic polymer (B), and molten or dispersed copolymer (C) with one another.

10. The process according to claim 9, wherein the mixing is carried out in an extruder.

11. The use of composites according to any of claims 1 to 8 as, or for the production of, hollow bodies, furniture, parts of profiles, interior parts of buildings, or exterior parts of buildings.

12. A process for the production of hollow bodies, furniture, parts of profiles, interior parts of buildings, or exterior parts of buildings, using at least one composite according to any of claims 1 to 8.

13. A hollow body, an item of furniture, a part of a profile, an interior part of a building, or an exterior part of a building, comprising, or produced using, at least one composite according to any of claims 1 to 8.

## Revendications

1. Matériau composite, comprenant :
(A) 30 à 90 % en poids de fibres naturelles,
(B) 9 à 69 % en poids d'au moins un polymère thermoplastique,
(C) 1 à 10 % en poids d'au moins un copolymère statistique ayant un poids moléculaire Mₙ d'au plus 20 000 g/mol, pouvant être obtenu par copolymérisation de
(a) 60 à 98 % en poids d'éthylène,
(b) 2 à 40 % en poids d'au moins un comonomère réactif, choisi parmi :
(b1) les acides monocarboxyliques en C₃-C₁₀ éthyléniquement insaturés,
(b2) les acides dicarboxyliques en C₄-C₁₀ éthyléniquement insaturés ou leurs anhydrides,
(b3) les époxyde-esters d'acides monocarboxyliques en C₃-C₁₀ éthyléniquement insaturés,
(b4) les comonomères de formule générale I 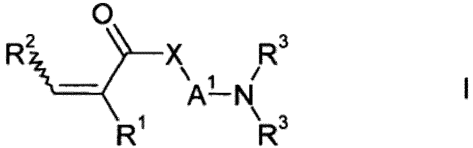 dans laquelle les variables sont définies de la manière suivante :
R¹ est choisi parmi l'hydrogène, un alkyle en C₁-C₁₀ non ramifié et ramifié,
R² est choisi parmi l'hydrogène, un alkyle en C₁-C₁₀ non ramifié et ramifié,
les R³ sont identiques ou différents, et choisis parmi l'hydrogène, un alkyle en C₁-C₁₀ non ramifié et ramifié et un cycloalkyle en C₃-C₁₂, deux radicaux R³ pouvant être reliés l'un à l'autre avec formation d'un cycle de 3 à 10 chaînons,
X est choisi parmi l'oxygène, le soufre et N-R⁴,
R⁴ est choisi parmi un alkyle en C₁-C₁₀ non ramifié et ramifié,
A¹ est un groupe bivalent, choisi parmi un alkylène en C₁-C₁₀, un cycloalkylène en C₄-C₁₀ et un phénylène,
et
(c) éventuellement au moins un autre comonomère.

2. Matériau composite selon la revendication 1, **caractérisé en ce que** les fibres naturelles sont choisies parmi les fibres de cellulose et/ou les fibres lignocellulosiques.

3. Matériau composite selon la revendication 1 ou 2, **caractérisé en ce que** les fibres naturelles sont choisies parmi les fibres de bois.

4. Matériau composite selon l'une quelconque des revendications 1 à 3, **caractérisé en ce que** les polymères thermoplastiques (B) sont choisis parmi le polyéthylène, le polypropylène et le polychlorure de vinyle.

5. Matériau composite selon l'une quelconque des revendications 1 à 4, **caractérisé en ce que** le polymère thermoplastique (B) est choisi parmi les thermoplastiques biodégradables, la biodégradabilité étant déterminée selon DIN EN 13432 (décembre 2000) et la dégradation étant d'au moins 90 % en 6 mois.

6. Matériau composite selon l'une quelconque des revendications 1 à 5, **caractérisé en ce que** le copolymère (C) est choisi parmi les copolymères qui contiennent sous forme copolymérisée en tant que comonomère supplémentaire (c) de l'acétate de vinyle ou un ester d'acide carboxylique en C₃-C₂₀ éthyléniquement insaturé.

7. Matériau composite selon l'une quelconque des revendications 1 à 6, **caractérisé en ce qu'**il comprend :
dans la plage allant de 40 à 85 % en poids de fibres naturelles (A),
dans la plage allant de 12 à 57 % en poids de polymère thermoplastique (B),
dans la plage allant de 3 à 5 % en poids de copolymère (C) .

8. Matériau composite selon l'une quelconque des revendications 1 à 7, **caractérisé en ce que** le copolymère (C) contient sous forme copolymérisée :
(a) 70 à 97 % en poids d'éthylène,
(b) 3 à 30 % en poids d'au moins un comonomère réactif, choisi parmi :
(b1) les acides monocarboxyliques en C₃-C₁₀ éthyléniquement insaturés,
(b2) les acides dicarboxyliques en C₄-C₁₀ éthyléniquement insaturés ou leurs anhydrides,
(b3) les époxyde-esters d'acides monocarboxyliques en C₃-C₁₀ éthyléniquement insaturés,
(b4) les comonomères de formule générale I 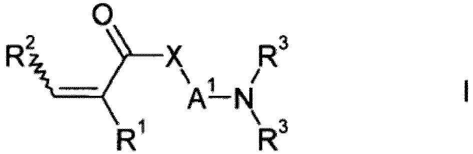 dans laquelle les variables sont définies de la manière suivante :
R¹ est choisi parmi l'hydrogène, un alkyle en C₁-C₁₀ non ramifié et ramifié,
R² est choisi parmi l'hydrogène, un alkyle en C₁-C₁₀ non ramifié et ramifié,
les R³ sont identiques ou différents, et choisis parmi l'hydrogène, un alkyle en C₁-C₁₀ non ramifié et ramifié et un cycloalkyle en C₃-C₁₂, deux radicaux R³ pouvant être reliés l'un à l'autre avec formation d'un cycle de 3 à 10 chaînons,
X est choisi parmi l'oxygène, le soufre et N-R⁴,
R⁴ est choisi parmi un alkyle en C₁-C₁₀ non ramifié et ramifié,
A¹ est un groupe bivalent, choisi parmi un alkylène en C₁-C₁₀, un cycloalkylène en C₄-C₁₀ et un phénylène,
et
(c) zéro à 30 % en poids d'un ou de plusieurs autres comonomères.

9. Procédé de fabrication de matériaux composites selon l'une quelconque des revendications 1 à 8, **caractérisé en ce que** les fibres naturelles (A), le polymère thermoplastique fondu (B) et le copolymère fondu ou dispersé (C) sont mélangés les uns avec les autres.

10. Procédé selon la revendication 9, **caractérisé en ce que** le mélange est réalisé dans une extrudeuse.

11. Utilisation de matériaux composites selon l'une quelconque des revendications 1 à 8 en tant que ou pour la fabrication de parties extérieures de bâtiments, de parties intérieures de bâtiments, de parties profilées, de meubles ou de corps creux.

12. Procédé de fabrication de parties extérieures de bâtiments, de parties intérieures de bâtiments, de parties profilées, de meubles ou de corps creux utilisant au moins un matériau composite selon l'une quelconque des revendications 1 à 8.

13. Parties extérieures de bâtiments, parties intérieures de bâtiments, parties profilées, meubles ou corps creux, comprenant ou fabriqués en utilisant au moins un matériau composite selon l'une quelconque des revendications 1 à 8.
